(19) Europäisches Patentamt
European Patent Office
Office européen des brevets

(11) **EP 2 229 045 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(21) Anmeldenummer: **08862207.1**

(22) Anmeldetag: **22.10.2008**

(51) Int Cl.:
***A01B 79/00*** *(2006.01)* ***A01D 34/00*** *(2006.01)*
***A01M 7/00*** *(2006.01)*

(86) Internationale Anmeldenummer:
**PCT/EP2008/064246**

(87) Internationale Veröffentlichungsnummer:
**WO 2009/077239 (25.06.2009 Gazette 2009/26)**

(54) **VORRICHTUNG ZUR LANDSCHAFTSPFLEGE**

DEVICE FOR LANDSCAPE MAINTENANCE

DISPOSITIF POUR L'ENTRETIEN DES ESPACES VERTS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.12.2007 DE 102007061385**

(43) Veröffentlichungstag der Anmeldung:
**22.09.2010 Patentblatt 2010/38**

(73) Patentinhaber: **Robert Bosch GmbH
70442 Stuttgart (DE)**

(72) Erfinder:
• **BIBER, Peter
72070 Tuebingen (DE)**
• **KOEDER, Thilo
70839 Gerlingen (DE)**
• **KOCH, Christoph
70178 Stuttgart (DE)**

(56) Entgegenhaltungen:
**DE-A1- 10 327 223     DE-A1- 19 932 552
DE-C1- 10 002 880     US-A1- 2003 019 152**

**Beschreibung**

Die vorliegende Erfindung betrifft eine Vorrichtung zur Landschaftspflege, insbesondere einen Rasenmäher, der zumindest eine Sensorrichtung aufweist.

Im Stand der Technik sind Verrichtungen zur Landschaftspflege bekannt, wie beispielsweise herkömmliche oder autonome Rasenmäher, Laubsammler, Unkrautjäter, Bewässerungsvorrichtungen und dergleichen, die zumindest eine Sensoreinheit aufweisen, welche ein selbständiges Ausführen von Arbeiten ermöglicht. Nachfolgend wird der Einfachheit halber nur noch auf Rasenmäher Bezug genommen, wobei ein solcher Rasenmäher jedoch nur als ein Beispiel für Vorrichtungen zur Laudschaftspflege dient und in keiner Weise als einschränkend zu verstehen ist.

Die US-A-2003/0019152 offenbart eine Vorrichtung zur Landschaftspflege umfassend zumindest eine Sensoreinrichtung, wobei die zumindest eine Sensoreinrichtung derart beschaffen ist, dass sie verschiedene Beschaffenheiten eines Untergrunds unterhalb und/oder in der Umgebung der Vorrichtung erfassen und zuordnen kann, indem sie den normalisierten differenzierten Vegetationsindex NDVI ermittelt.

Bei autonomen Rasenmähern sind neben einer sicheren Erfassung der Arbeitsfläche, einer möglichst effizienten Arbeitsweise, wie beispielsweise eine Vermeidung des Mehrfachüberfahrens von Rasenflächen bei vollständiger Flächenabdeckung beim Mähen oder dergleichen, eine sichere Arbeitsweise, bei der weder der Rasenmäher noch andere Gegenstände oder Personen zu Schaden kommen, sowie ein minimaler Nachbearbeitungsaufwand von Bedeutung, wie etwa das Trimmen der Rasenkanten nach dem Mähen.

Zur Realisierung dieser Anforderungen erfassen bekannte autonome Rasenmäher mit Hilfe verschiedener Arten von Sensoreinheiten die Zustände des Arbeitsumfelds. Die von den Sensoreinheiten erfassten Zustände werden dann in Form eines Ausgangssignals an eine Auswerteeinheit weitergeleitet, welche die Ausgangssignale auswertet und basierend auf dem Auswertungsergebnis Steuerbefehle generiert, um Komponenten des Rasenmähers anzusteuern, wie beispielsweise eine Antriebseinheit des Rasenmähers, um den mit Hilfe einer Sensoreinheit detektierten Hindernissen auszuweichen.

So beschreibt beispielsweise die DE 101 52 726 A1 einen autonomen Rasenmäher, bei dem ein stromdurchflossener Einfassungsdraht zum Einsatz kommt, der im Vorfeld um den zu mähenden Bereich gelegt oder wahlweise vergraben wird. Der Rasenmäher verfügt über eine oder mehrere Sensoreinheiten, welche das Signal dieses stromdurchflossenen Einfassungsdrahtes erfassen. Die erfassten Signale werden an eine Auswerteeinheit weitergeleitet, die Steuerbefehle für eine Antriebseinheit generiert, um sicherzustellen, dass der Rasenmäher den mit Hilfe des Einfassungsdrahtes definierten Arbeitsbereich nicht verlässt.

Wenngleich die Verlegung des Einfassungsdrahtes eine sehr zuverlässige Lösung zur Abgrenzung des Arbeitsbereiches darstellt, ist diese jedoch mit einem hohen Installationsaufwand verbunden. So muss nicht nur die Außengrenze des Arbeitsbereiches mit dem Einfassungsdraht definiert werden, sondern auch Aussparungen innerhalb des Arbeitsbereiches, die nicht gemäht werden sollen, wie beispielsweise Sträucher, Beete, Wege oder dergleichen, müssen mit Hilfe des Einfassungsdrahtes abgegrenzt werden. Um zu vermeiden, dass der Rasenmäher an vertikalen Grasnaben abstürzt, muss der Draht in einem sicheren Abstand von solchen Grasnaben verlegt werden. Hierbei lässt sich jedoch nicht sicherstellen, dass ein sauberer Schnitt an der Außengrenze des Arbeitsbereiches erfolgt. Entsprechend ist normalerweise eine Nachbearbeitung entlang der Außengrenze des Arbeitsbereiches mit Hilfe eines Rasentrimmers oder dergleichen erforderlich, was nicht wünschenswert ist. Zudem kann ein Einfassungsdraht nicht verhindern, dass der Rasenmäher innerhalb des definierten Arbeitsbereiches mit einem Hindernis kollidiert, wie beispielsweise mit einem Gegenstand oder mit einer Person, so dass Unfälle nicht ausgeschlossen werden können.

Ferner sind autonome Rasenmäher verfügbar, die über taktile Sensoreinheiten verfügen, die ein Hindernis darstellendes Objekt erst dann erkennen, wenn eine Kollision bereits aufgetreten ist. Nach aufgetretener Kollision werden normalerweise entsprechende Steuerbefehle generiert, welche die Antriebseinheit des Rasenmähers dazu veranlassen, einen anderen Pfad einzuschlagen. Ein Problem bei der Verwendung solcher taktilen Sensoreinheiten besteht darin, dass bei einer Kollision mit einem Gegenstand der Gegenstand und auch der Rasenmäher selbst beschädigt werden kann. Zudem können flache Gegenstände, wie beispielsweise eine Hand im Gras, meist nicht detektiert werden, so dass Unfällen nicht oder nur unzureichend vorgebeugt wird.

Die DE 103 02 908 A1 beschreibt einen autonomen Rasenmäher, der über eine Sensoreinheit verfügt, welche die Laufzeit von Ultraschallwellen von einem Ultraschallsender zu einem Ultraschallempfänger zur Bestimmung der Entfernung einer schallreflektierenden Begrenzung des Rasenareals oder möglicher Hindernisse innerhalb des Rasenareals erfasst und in eine Auswerteeinheit einliest. Diese Auswerteeinheit verarbeitet dann die entsprechenden Daten und generiert basierend auf dem Auswertungsergebnis Steuerbefehle für die Antriebseinheit des Rasenmähers, die diesen dazu veranlassen, einen anderen Pfad einzuschlagen. Mit Hilfe dieser Sensoreinheit lassen sich im Gegensatz zu den zuvor beschriebenen taktilen Sensoreinheiten Objekte vor einer drohenden Kollision detektieren. Nachteilig bei diesen Sensoreinheiten ist jedoch, dass deren korrekte Funktion erst ab einer Mindestentfernung funktioniert und dass Objekte am Untergrund, wie beispielsweise einer Kinderhand im Gras oder dergleichen, nicht sicher erkannt werden können.

Ausgehend von diesem Stand der Technik ist es eine Aufgabe der vorliegenden Erfindung, eine Vorrichtung zur Landschaftspflege mit alternativem Aufbau zu schaffen, welche die zuvor genannten Probleme zumindest teilweise behebt.

**Offenbarung der Erfindung**

Zur Lösung dieser Aufgabe schafft die vorliegende Erfindung eine Vorrichtung zur Landschaftspflege, wie beispielsweise einen Rasenmäher, einen Laubsammler, einen Unkrautjäter, einen Vertikutierer, eine Bewässerungsvorrichtung oder dergleichen, die zumindest eine Sensoreinrichtung aufweist.

Erfindungsgemäß ist die zumindest eine Sensoreinrichtung derart beschaffen, dass sie verschiedene Beschaffenheiten eines Untergrunds unterhalb und/oder in der unmittelbaren Umgebung der Vorrichtung erfassen und zuordnen kann. Mit anderen Worten ist die erfindungsgemäße Sensoreinrichtung dazu in der Lage, zwischen verschiedenen Beschaffenheiten des Untergrunds unterhalb und/oder in der Umgebung der Vorrichtung zu unterscheiden. Im einfachsten Fall kann beispielsweise die Sensoreinrichtung eines Rasenmähers feststellen, ob es sich bei dem Untergrund um chlorophyllhaltige Vegetation wie beispielsweise Gras oder um einen Untergrund mit einer anderen Beschaffenheit handelt. Entsprechend kann der Rasenmäher zwischen einem zu mähenden Untergrund und einem nicht zu mähenden Untergrund unterscheiden, ohne dass weitere Hilfsmittel vorgesehen sind, wie beispielsweise ein Einfassungsdraht oder dergleichen. Auf den mit einem Einfassungsdraht verbundenen Installationsaufwand könnte entsprechend verzichtet werden. Zudem kann die erfindungsgemäße Sensoreinrichtung die Grenze zwischen einem Arbeitsbereich und einem Nicht-Arbeitsbereich genau erfassen, so dass der Rasenmäher sehr nah an diese Grenze geführt werden kann. Entsprechend kann auch der Nachbearbeitungsaufwand, wie beispielsweise das Trimmen von Rasenkanten, deutlich reduziert werden. Indem die Sensoreinrichtung der vorliegenden Erfindung die Beschaffenheit des Untergrunds unterhalb und/oder in der Umgebung der Vorrichtung bestimmen kann, ist es ferner möglich, Hindernisse zu detektieren, wie beispielsweise eine menschliche Hand oder dergleichen, so dass entsprechende Maßnahmen ergriffen werden können, um eine Kollision der Vorrichtung mit dem Hindernis zu vermeiden. Die Sensoreinrichtung kann natürlich auch derart beschaffen sein, dass sie zwischen mehr als zwei Beschatfenheiten des Untergrunds unterscheiden kann, wie beispielsweise zwischen Gras, Erde, Stein, Metall oder dergleichen.

Zudem ist die Sensoreinrichtung gemäß der vorliegenden Erfindung dazu in der Lage, auf einem Untergrund liegende Objekte zu detektieren, durch welche die Beschaffenheit des Untergrunds verändert wird. Entsprechend können Maßnahmen ergriffen werden, um einem solchen Objekt auszuweichen oder Schäden bei einer Kollision mit dem Objekt zu verringern oder zu vermeiden.

Gemäß einer Ausgestaltung der erfindungsgemäßen Vorrichtung ist die Sensoreinrichtung derart beschaffen, dass sie verschiedene Beschaffenheiten des Untergrunds anhand des Reflexionsgrads einer von der Sensoreinrichtung ausgesendeten und am Untergrund reflektierten Strahlung erfassen und zuordnen kann. I lierbei wird die Tatsache ausgenutzt, dass verschiedene Materialien Licht bestimmter Wellenlängen unterschiedlich reflektieren.

Die Sensoreinrichtung ist diesbezüglich derart beschaffen, dass sie verschiedne Beschaffenheiten des Untergrunds erfassen und zuordnen kann, indem sie den normalisierten differenzierten Vegetationsindex NDVI ermittelt. I lierbei wird die Tatsache ausgenutzt, dass chlorophyllhaltige Vegetation, wie beispielsweise Gras, im sichtbaren Spektralbereich, d.h. bei einer Wellenlänge von etwa 400-700 nm, retativ wenig und im darauffolgenden nahen Infrarot-Bereich bei einer Wellenlänge von etwa 700-1.300 nm relativ viel Strahlung reflektiert. Dabei korreliert der Anstieg der Reflexion stark mit der Vitalität der Vegetation. Das heißt, je vitaler die Vegetation ist, desto größer ist der Anstieg des Reflexionsgrades in diesem Spektralbereich. Andere Oberflächenmaterialien, wie beispielsweise Boden, Fels oder auch tote Vegetation zeigen keine derart starken Unterschiede des Reflexionsgrades beider Bereiche. Dieser Umstand kann folglich dazu dienen, eine mit Vegetation bedeckte Arbeitsfläche von einer unbedeckten Fläche zu unterscheiden. Auf diese Weise kann der Arbeitsbereich der Vorrichtung bestimmt werden. Der NDVI berechnet sich aus der Reflexion im nahen Infrarot-Bereich (NIR) bei einer Wellenlänge von etwa 725 bis etwa 1100 nm und der Reflexion im roten sichtbaren Bereich (Rot) bei einer Wellenlänge von etwa 620 bis etwa 700 nm anhand der nachfolgenden Gleichung

$$NDVI \; = \; \frac{NIR - Rot}{NIR + Rot} \quad (\text{bzw.} \quad \frac{Rot - NIR}{Rot + NIR})$$

Durch eine solche Normierung ergibt sich ein Wertebereich zwischen -1 und +1, wobei ein positiver Wert nahe 0,8 bei der ersten Gleichung gesunde, photosynthetisch aktive Pflanzen repräsentiert.

Bevorzugt weist die Sensoreinrichtung wenigstens eine Lichtquelle auf, die derart beschaffen ist, dass sie Licht im sichtbaren Spektralbereich bei einer Wellenlänge von etwa 620 bis etwa 700 nm, und Licht im Infrarot-Bereich bei einer Wellenlänge von etwa 725 bis etwa 1100 nm aussenden kann. Ferner verfügt die Sensoreinrichtung über zumindest eine Empfangseinheit, die reflektiertes Licht empfängt. Wird von der Lichtquelle abwechselnd Licht im sichtbaren Spektralbereich und im Infrarot-Bereich ausgesendet, so kann die Empfangseinheit derart beschaffen sein, dass sie Licht in beiden Bereichen empfängt. Auch kann sie einen Empfangsteil zum Empfangen von Licht im sichtbaren Spektralbereich und ein weiteres Empfangsteil zum Empfangen von Licht im Infrarot-Bereich aufweisen. Alternativ können mehrere Empfangseinheiten vorgesehen sein, wobei eine derart eingerichtet ist, dass sie Licht im sichtbaren Spektralbereich empfängt, und eine weitere derart eingerichtet ist, dass sie Licht im Infrarot-Bereich empfängt.

Gemäß einer weiteren Ausgestaltung der vorliegenden Erfindung kann die Sensoreinrichtung auch wenigstens zwei Lichtquellen aufweisen, die derart beschaffen sind, dass die eine Lichtquelle Licht im sichtbaren Spektralbereich und die andere Lichtquelle Licht im Infrarot-Bereich aussendet. Ferner umfasst die Sensoreinrichtung zumindest eine Empfangseinheit. Diese Empfangseinheit kann mehrere Empfangsteile aufweisen, wie es zuvor beschrieben wurde. Auch können mehrere Empfangseinheiten vorgesehen sein.

Es sollte klar sein, dass die Vorrichtung beliebig viele Sensoreinrichtungen an beliebigen Positionen aufweisen kann, um einen vorbestimmten Bereich des Untergrunds abzuscannen. Ferner kann jede Sensoreinrichtung beliebig viele Lichtquellen aufweisen. Die Sensoreinrichtungen und/oder die Lichtquellen können dabei beispielsweise in Form einer Reihenanordnung, einer Matrixanordnung oder dergleichen angeordnet sein. Auch können die Sensoreinrichtungen und/oder der Lichtquellen beweglich angeordnet sein, so dass sie den Untergrund beispielsweise durch Pendelbewegungen oder dergleichen abscannen. Auf diese Weise kann mit wenigen Sensoreinrichtungen und/oder Lichtquellen ein großer Bereich des Untergrunds gescannt werden.

Die Sensoreinrichtung kann ferner derart beschaffen sein, dass sie verschiedene Beschaffenheiten des Untergrunds alternativ oder zusätzlich anhand einer Fluoreszenzspektroskopie erfassen und zuordnen kann. Bei der Fluoreszenzspektroskopie wird die spontane Emission von Licht beim Übergang eines elektronisch angeregten Systems in einen Zustand niedrigerer Energie genutzt, wobei sich die Lichtemission verschiedener Materialien voneinander unterscheidet. Die Lichtemission oder eine Veränderung der Lichtemission lässt sich mit bekannten Mitteln messtechnisch erfassen, so dass die Beschaffenheit oder eine Änderung der Beschaffenheit detektierbar ist. Hierzu umfasst die Sensoreinrichtung bevorzugt zumindest eine Anregungseinheit, die dazu geeignet ist, den Untergrund in der näheren Umgebung und/oder unterhalb der erfindungsgemäßen Vorrichtung in einen elektronisch angeregten Zustand zu überführen, wie beispielsweise eine Lichtquelle oder dergleichen. Ferner weist die Sensoreinrichtung zumindest eine Empfangseinheit zum Empfangen des vom Untergrund als Antwort auf die elektronische Anregung emittierten Lichtes auf. Die von der Empfangseinheit empfangenen Signale werden zur Weiterverarbeitung und Zuordnung einer Auswerteeinheit zugeführt.

Die erfindungsgemäße Vorrichtung weist ferner bevorzugt eine Auswerteeinrichtung auf, die derart beschaffen ist, dass sie Signalausgänge der Sensoreinrichtung, welche die Beschaffenheit des Untergrunds repräsentieren, auswertet und/oder weiterverarbeitet.

Eine Auswertung bzw. Weiterverarbeitung kann dahingehend erfolgen, dass die Auswerteeinrichtung derart beschaffen ist, dass sie basierend auf den Signalausgängen der Sensoreinrichtung einen virtuellen Plan des Untergrunds erstellt. Ein solcher Plan kann u.a. dazu verwendet werden, festzustellen, wo sich ein Rasen in einem schlechten Zustand befindet. Entsprechend können Gegenmaßnahmen getroffen werden, wie beispielsweise ein Wässern oder Düngen des Rasens. Auch können anhand eines solchen Plans die Perioden ermittelt werden, in denen ein Rasen geschnitten, gewässert oder gedüngt werden sollte.

Zudem kann die Vorrichtung eine Anzeigeeinrichtung aufweisen, die derart beschaffen ist, dass sie dem Bediener der Vorrichtung ein Auswerteergebnis der Auswerteeinrichtung anzeigt. Dieser kann dann ggf. unmittelbar Maßnahmen in Abhängigkeit von dem Auswerteergebnis einleiten.

Ferner kann eine Auswertung und/oder Weiterverarbeitung dahingehend erfolgen, dass die Auswerteeinrichtung derart beschaffen ist, dass sie basierend auf den Signalausgängen der Sensoreinrichtung Steuerbefehle für weitere Komponenten der Vorrichtung generiert. So kann beispielsweise eine Antriebseinrichtung der Vorrichtung, mit deren Hilfe die Vorrichtung bewegt wird, derart angesteuert werden, dass die Vorrichtung einem Hindernis, einer Rasenkante oder dergleichen ausweicht. Auch kann beispielsweise ein Motor eines Rasenmäher- oder Vertikutiererschneidblattes derart angesteuert werden, dass das Schneidblatt angehalten wird, sobald ein Objekt, wie beispielsweise eine menschliche Hand oder dergleichen, in unmittelbarer Nähe der Vorrichtung detektiert wird und ein Ausweichen nicht mehr möglich ist. Auf diese Weise können Unfälle verhindert werden.

Gemäß einer vorteilhaften Ausgestaltung der vorliegenden Erfindung handelt es sich bei der Vorrichtung um einen Rasenmäher, insbesondere um einen autonomen Rasenmäher, der Mäharbeiten selbständig ausführen kann.

**Ausführungsbeispiel**

Nachfolgend wird eine beispielhafte Ausführungsform der vorliegenden Erfindung unter Bezugnahme auf die beiliegenden Zeichnungen genauer beschrieben. Darin ist:

Fig. 1 ein Diagramm, das die prozentuale Reflexion verschiedener Gegenstände in Abhängigkeit von der Wellenlänge zeigt;

Fig. 2a eine schematische Ansicht eines autonomen Rasenmähers als Beispiel einer Vorrichtung zur Landschaftspflege gemäß der vorliegenden Erfindung;

Fig. 2b eine schematische Ansicht einer Sensoreinrichtung des in Fig. 2a dargestellten Rasenmähers;

Fig. 3a eine schematische Ansicht des in Fig. 2 dargestellten Ra- senmähers, der ausgehend von einer Fläche mit einer ers- ten Beschaffenheit auf eine Fläche mit einer zweiten Be- schaffenheit fährt;

Fig. 3b ein Diagramm, das den NDVI in Abhängigkeit von der von dem Rasenmäher in Fig. 3a überfahrenen Fläche zeigt;

Fig. 4 eine schematische Ansicht einer alternativen Sensorein- richtung gemäß der vorliegenden Erfindung; und

Fig. 5 ein Diagramm zur Erläuterung des Prinzips der Fluores- zenzspektroskopie.

Gleiche Bezugsziffern beziehen sich nachfolgend auf gleiche oder gleichartige Bauteile.

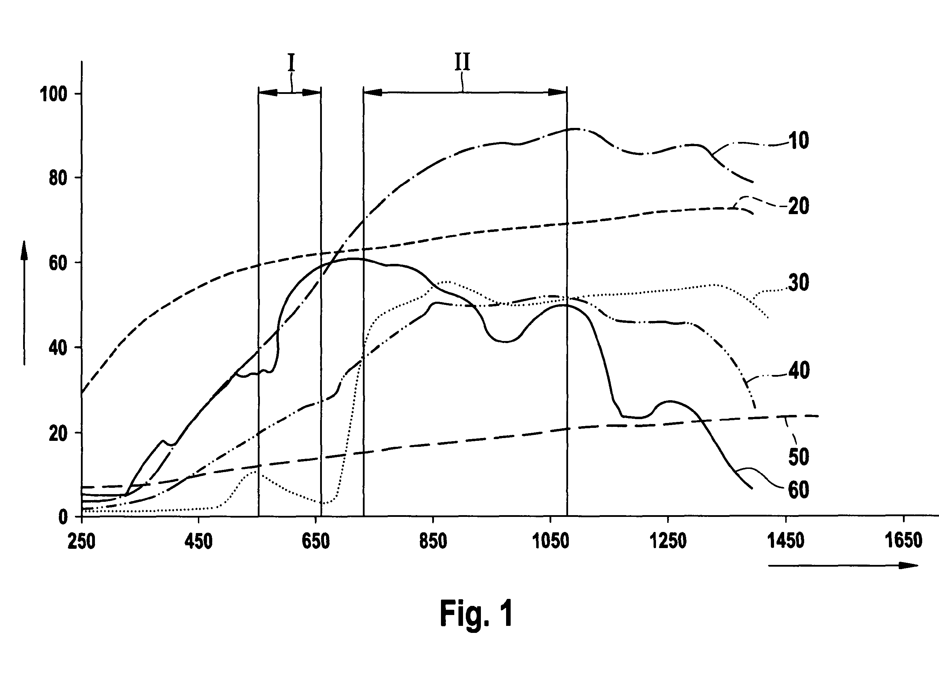

Fig. 1 zeigt ein Diagramm, das den prozentualen Reflexionsgrad verschiedener Materialien bei unterschiedlichen Wellenlängen zeigt. Die Bezugsziffer 10 bezeichnet dabei die Kennlinie für Holz, genauer gesagt für Eiche, die Bezugsziffer 20 die Kennlinie für Stahl, die Bezugsziffer 30 die Kennlinie für frischen grünen Rasen, die Bezugsziffer 40 die Kennlinie für trockenen Rasen die Bezugsziffer 50 die Kennlinie für Erde und die Bezugsziffer 60 die Kennlinie für menschliche Haut.

In das in Fig. 1 dargestellte Diagramm sind ferner zwei Messbereiche I und II eingetragen. Der Messbereich I liegt im sichtbaren Spektralbereich zwischen Wellenlängen von etwa 620 bis etwa 700 nm, und der Messbereich II liegt im nahen Infrarot-Bereich zwischen Wellenlängen von etwa 725 bis etwa 1100 nm.

Vergleicht man die einzelnen Kennlinien innerhalb des Messbereiches I miteinander, so ist zu erkennen, dass der Reflexionsgrad teilweise stark voneinander abweicht. So liegt beispielsweise der Reflexionsgrad für frischen grünen Rasen etwa zwischen 5 und 10% (siehe Kennlinie 30), derjenige für trockenen Rasen zwischen 20 und 30% (siehe Kennlinie 40), diejenigen von Eiche und menschlicher Haut im Bereich von 30 bis 60% (siehe Kennlinien 10 und 60) und derjenige von Stahl (siehe Kennlinie 20) bei etwa 60%. Somit kann bereits alleine anhand von Messungen im Messbereich I eine grobe Unterscheidung zwischen verschiedenen Beschaffenheiten getroffen werden. Gleiches gilt im Wesentlichen für den Messbereich II.

Eine noch deutlichere Unterscheidung zwischen gesunder Vegetation und anderen Beschaffenheiten des Untergrunds kann jedoch erzielt werden, indem der normalisierte differenzierte Vegetationsindex (NDVI) ermittelt wird. Dieser Index beruht auf der Tatsache, dass gesunde Vegetation im sichtbaren Spektralbereich bei einer Wellenlänge von etwa 400 bis etwa 700 nm relativ wenig und im darauffolgenden nahen Infrarot-Bereich bei Wellenlängen von etwa 700 bis etwa 1100 nm relativ viel Strahlung reflektiert. Dies ist in Fig. 1 sehr gut anhand der Kennlinie 30 für frischen grünen Rasen zu erkennen, die zwischen dem Messbereich I und dem Messbereich II stark ansteigt. Der NDVI wird anhand der Gleichung

$$NDVI = \frac{NIR - Rot}{NIR + Rot} \quad (bzw. \quad \frac{Rot - NIR}{Rot + NIR})$$

berechnet, wobei NIR die Reflexion im nahen Infrarot-Bereich und Rot die Reflexion im roten sichtbaren Bereich ist. Nachfolgend wird nur auf die erste Gleichung Bezug genommen.

Durch die Normierung ergibt sich ein Wertebereich zwischen -1 und +1, wobei positive Werte nahe 0,8 viele, gesunde und photosynthelisch aktive Pflanzen repräsentieren.

Anhand der Reflexionsgrade in den Mestbereiehen I und II und anhand der Berechnung des NDVI kann demnach die Beschaffenheit des Untergrunds erfasst und nach einer entsprechenden Auswertung der erfassten Daten den entsprechenden Materialien zugeordnet werden. Mit anderen Worten kann beispielsweise unterschieden werden, ob es sich bei einem gescannten Untergrund um chlorophyllhaltige Vegetation, wie beispielsweise frischer grüner Rasen, um Erde, um Holz, um Stahl, um trockenen Rasen oder um menschliche Haut handelt. Basierend auf einer solchen Unterscheidung ist es entsprechend möglich, zwischen einer Fläche, die durch die erfindungsgemäße Vorrichtung bearbeitet werden soll, und einer Fläche zu unterscheiden, die nicht von der erfindungsgemäßen Vorrichtung zu bearbeiten ist. Auch ist es möglich, Hindernisse, wie beispielsweise auf einer zu bearbeitenden Fläche liegende Fremdobjekte oder Personen zu detektieren und diesen entsprechend auszuweichen.

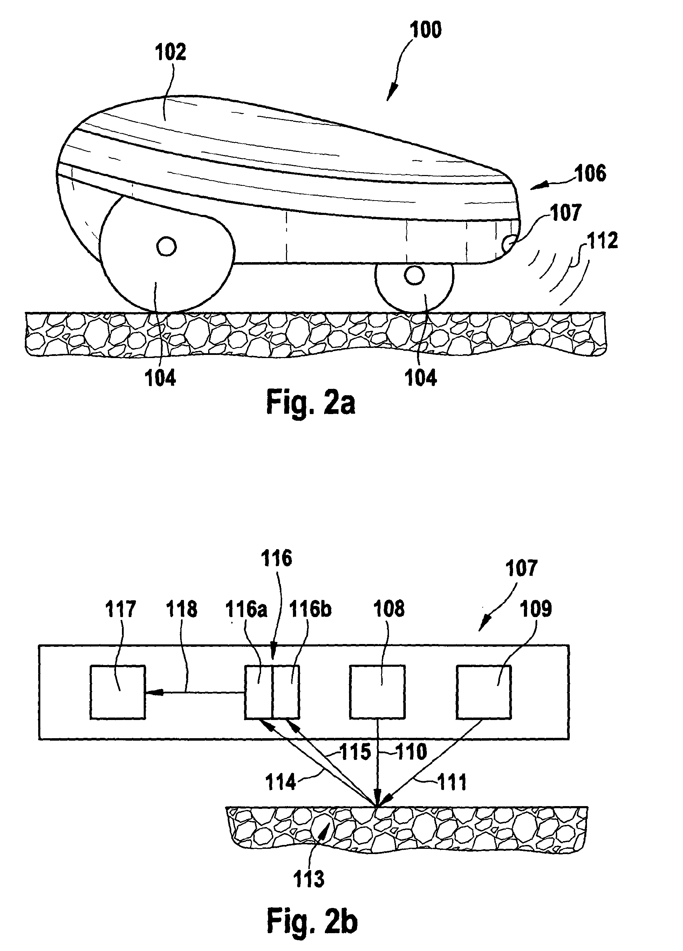

Fig. 2a ist eine schematische Ansicht, die einen Rasenmäher 100 als Beispiel einer erfindungsgemäßen Vorrichtung zur Landschaftspflege zeigt. Bei dem Rasenmäher 100 handelt es sich um einen autonom arbeitenden Rasenmäher, der die Mäharbeiten selbständig ausführen kann. Der Rasenmäher 100 umfasst ein Gehäuse 102, an dem vorliegend drei Räder 104 angeordnet sind, wobei das vordere Rad um eine vertikale Achse drehbar ist, so dass der Rasenmäher 100 die Bewegungsrichtung ändern kann. Die hinteren Räder 104 werden mit Hilfe von einer nicht dargestellten Antriebseinheit angetrieben, die innerhalb des Gehäuses 102 angeordnet ist. Ferner verfügt der Rasenmäher 100 an seiner Unterseite über ein in Fig. 2a nicht dargestelltes Schneidblatt zum Mähen des Rasens, wobei das Schneidblatt durch einen ebenfalls in dem Gehäuse 102 aufgenommenen Motor angetrieben wird.

An der Vorderseite des Rasenmähers 106 ist eine Sensoreinrichtung 107 gemäß der vorliegenden Erfindung angeordnet, die genauer in der schematischen Ansicht gemäß Fig. 2b dargestellt ist. Die Sensoreinrichtung 107 weist zwei Lichtquellen 108 und 109 auf, wobei die erste Lichtquelle 108 Licht 110 im sichtbaren Spektralbereich (Messbereich I) und die zweite Lichtquelle 109 Licht 111 im Infrarot-Bereich (Messbereich II) aussendet, was in Fig. 2 schematisch durch die Bezugsziffer 112 angedeutet ist. Alternativ kann die Sensoreinrichtung 107 auch über eine einzelne Lichtquelle verfügen, die Licht im sichtbaren Spektralbereich und im Infrarot-Bereich aussendet. Ferner kann die Sensoreinrichtung 107 auch mehr als zwei Lichtquellen aufweisen, die in Reihe, in einer Matrix oder in einer anderen Anordnung vorgesehen sind, um einen vorbestimmten Bereich des Untergrunds 113 abzuscannen. Zudem können die Lichtquellen auch beweglich, beispielsweise schwenkbar, angeordnet sein, wobei während der Schwenkbewegung ein Scan des Untergrunds 113 vorgenommen wird. Auf diese Weise ist es möglich, mit wenigen Lichtquellen einen großen Bereich des Untergrunds 113 zu scannen. Schließlich sollte klar sein, dass Sensoreinrichtungen 107 in beliebiger Anzahl und an beliebigen Positionen des Rasenmähers 100 in Abhängigkeit von dem zu scannenden Bereich des Untergrunds 113 vorgesehen sein können, so beispielsweise auch am Unterboden des Rasenmähers 100.

Das von den Lichtquellen 108 und 109 der Sensoreinrichtung 107 ausgesendete Licht 110, 111 wird an dem Untergrund 113 reflektiert, und das reflektierte Licht 114, 115 wird durch zumindest eine Empfangseinheit 116 der Sensoreinrichtung 107 empfangen. Hierzu umfasst die Empfangseinheit 116 ein Empfangsteil 116a zum Empfang von Licht im sichtbaren Spektralbereich und ein Empfangsteil 116b zum Empfangen von Licht im Infrarot-Bereich. Es sollte klar sein, dass alternativ auch zwei Empfangseinheiten vorgesehen sein können, wobei die eine Licht im sichtbaren Spektralbereich und die andere Licht im Infrarotbereich empfängt. Die Empfangseinheit 116 übermittelt die empfangenen Signale an eine Auswerteeinheit 117, was in Fig. 2b durch den Pfeil 118 angedeutet ist, die den normalisierten differenzierten Vegetationsindex NDVI anhand der eingangs genannten Gleichung ermittelt. Anhand des Reflexionsgrades und/ oder anhand des NDVI-Wertes und/oder anhand einer Änderung des Reflexionsgrades und/oder des NDVI-Wertes kann die Beschaffenheit oder eine Änderung der Beschaffenheit des Untergrunds 113 ermittelt werden. Es kann also festgestellt werden, ob es sich bei dem durch die Sensoreinrichtung 107 des Rasenmähers 100 erfassten Untergrund 113 um chlorophyllhaltige Vegetation, wie beispielsweise frischen grünen Rasen, um trocknen Rasen, um Stein, Holz, Metall, Haut oder dergleichen handelt, oder ob sich die Beschaffenheit des Untergrunds 113 ändert.

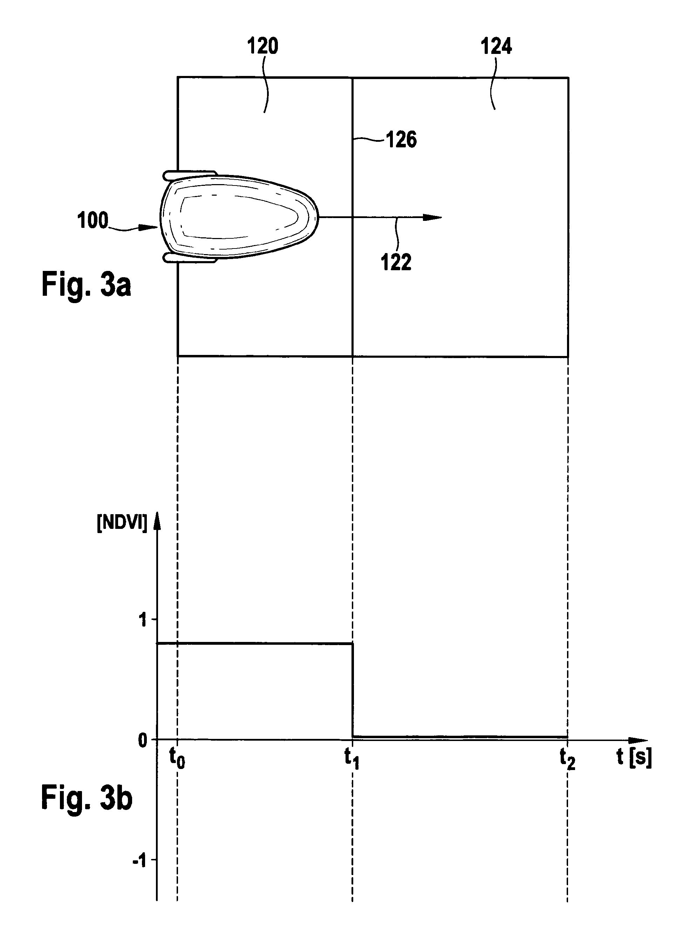

Fig. 3a ist eine schematisch Ansicht und zeigt den in Fig. 2a dargestellten Rasenmäher 100, der sich ausgehend von einer Fläche 120, bei der es sich um frischen grünen Rasen handelt, in Richtung des Pfeils 122 auf eine Fläche 124 bewegt, bei der es sich um Erde handelt. Die Flächen 120 und 124 sind dabei durch eine Grenzlinie 126 voneinander getrennt.

Wie es in Fig. 3b gezeigt ist, ergibt sich ein NDVI-Wert von etwa +0,8, solange sich der Rasenmäher 100 auf der Fläche 120 bewegt. Sobald die Sensoreinrichtung 107 des Rasenmähers 100 die Fläche 124 jenseits der Grenzlinie 126 abtastet, ändert sich der von der Auswerteeinheit ermittelte NDVI-Wert schlagartig etwa auf den Wert Null, woraufhin die Auswerteeinrichtung 117 darauf schließt, dass es sich bei der Fläche 124 um eine Fläche handelt, die nicht von dem Rasenmäher 100 bearbeitet werden muss. Entsprechend generiert sie ein Steuersignal für die Antriebseinheit, was dazu führt, dass der Rasenmäher 100 seine Bewegungsrichtung ändert und einen Pfad einschlägt, so dass er auf der zu mähenden Fläche 120 bleibt. Beete, Wege oder Rasengrenzen können entsprechend erfasst und umfahren werden. Je nach Empfindlichkeit der Sensoreinrichtung 107 kann sogar zwischen ungemähtem und bereits gemähtem Rasen unterschieden werden, so dass ein Mehrfachüberfahren einer Rasenfläche vermieden werden kann. Auf diese Weise kann die Effektivität des autonomen Rasenmähers 100 gesteigert werden.

Es sollte klar sein, dass die Sensoreinrichtung 107 des Rasenmähers 100 auch Objekte erfassen kann, die ein Hindernis für den Rasenmäher 100 darstellen, wie beispielsweise auf einem Rasen liegende Gegenstände, Personen oder dergleichen. Werden derartige Hindernisse von der Sensoreinrichtung 107 erfasst, so kann die Auswerteeinheit 117 auch hier Steuersignale zum Ansteuern der Antriebseinheit generieren, um dem entsprechenden Hindernis auszuweichen. Auch können Steuersignale generiert werden, die andere Komponenten des Rasenmähers 100 ansteuern, wie beispielsweise den Motor für das Schneidblatt des Rasenmähers 100. Dieser kann beispielsweise ausgeschaltet werden, wenn die Sensoreinrichtung 107 ein Hindernis detektiert hat, ein Ausweichen jedoch nicht mehr möglich ist.

Auf diese Weise kann eine Beschädigung des Rasenmähers 100 und des Hindernisses verhindert werden.

Zudem können anhand der ermittelten NDVI-Werte Karten von Arbeitsbereichen erstellt werden, die von dem Rasenmäher 100 bearbeitet wurden. So lässt sich beispielsweise nach dem Mähen feststellen, wo sich auf der Fläche, die von dem Rasenmäher 100 bearbeitet wurde, Bereiche trocknen Grases befinden, so dass diese durch Wässern, Düngen oder dergleichen nachbearbeitet werden können. Auch können Hindernisse eingezeichnet werden, die dann ggf. entfernt werden können. Zudem kann die generierte Karte bei einer erneuten Bearbeitung dieser Fläche durch den Rasenmäher 100 genutzt werden, um den Mähvorgang effektiver zu gestalten.

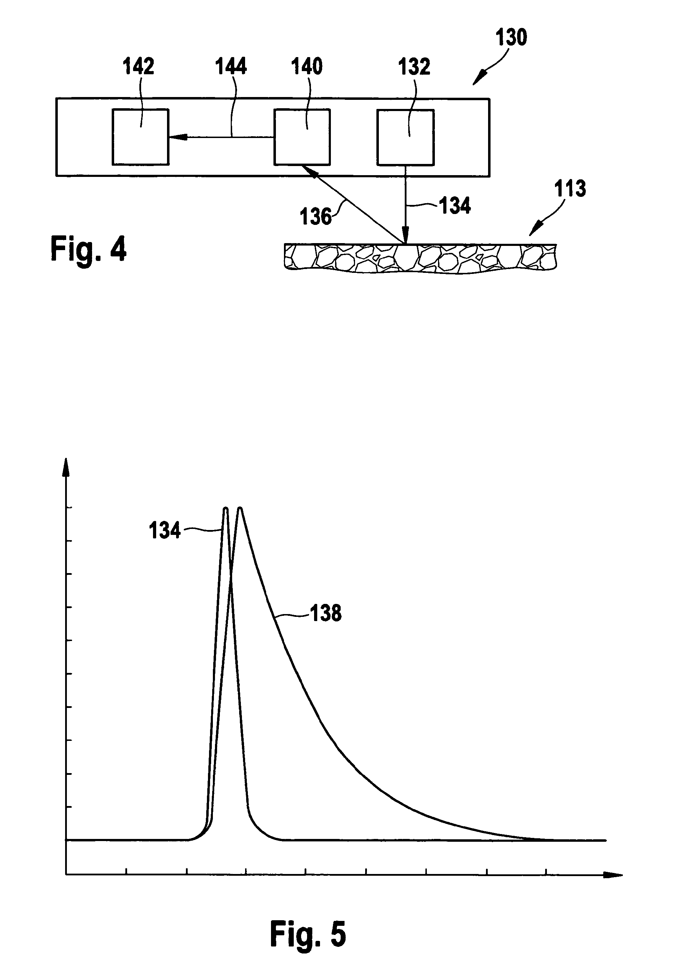

Alternativ oder zusätzlich zu der zuvor beschriebenen Sensoreinrichtung 107 kann der Rasenmäher über eine Sensoreinrichtung 130 verfügen, die schematisch in Fig. 4 dargestellt und derart beschaffen ist, dass sie verschiedene Beschaffenheiten des Untergrunds anhand einer Fluoreszenzspektroskopie erfassen und zuordnen kann. Die Sensoreinrichtung 130 und das Prinzip der Fluoreszenzspektroskopie werden nachfolgend unter Bezugnahme auf die Fig. 4 und 5 näher erläutert.

Die in Fig. 4 dargestellte Sensoreinrichtung 130 ist vorliegend an einer Position des Rasenmähers 100 angeordnet, die derjenigen der Sensoreinrichtung 107 in Fig. 2a entspricht. Sie umfasst eine Anregungseinheit 132, die dazu geeignet ist, einen mit der Sensoreinrichtung 130 zu scannenden Bereich des Untergrunds 113 in einen elektronisch angeregten Zustand zu überführen. Bei der vorliegenden Ausführungsform handelt es sich bei der Anregungseinheit beispielsweise um eine Licht aussendende LED, die gepulst Anregungsimpulse 134 in Richtung des Untergrunds 113 aussendet. Durch die Anregungsimpulse 134 wird der entsprechende Bereich des Untergrunds 13 in einen elektronisch angeregten Zustand überführt, woraufhin dieser entsprechend seiner Fluoreszenzeigenschaften Licht 136 emittiert, dessen Intensität mit dem Übergang aus dem angeregten Zustand in den Zustand niedriger Energie abklingt. Die Abklingkurve des Lichts 136 ist in Fig. 5 dargestellt und mit der Bezugsziffer 138 bezeichnet. Das von dem Untergrund 113 emittierte Licht 136 wird von einer Empfangseinheit 140 der Sensoreinrichtung 130 empfangen, und die von der Empfangseinheit 140 empfangenen Signale werden einer Auswerteeinheit 142 zugeführt, was in Fig. 4 schematisch durch den Pfeil 144 angedeutet ist. Da sich die Lichtemission und/oder die Abklingkurven verschiedener Materialien voneinander unterscheiden, kann die Auswerteeinheit anhand der von der Empfangseinheit empfangenen Signale mit Hilfe von in der Auswerteeinheit hinterlegten Programmen und/oder Daten das Material des Untergrunds 113 identifizieren oder zumindest eine Änderung des Untergrundmaterials erfassen. Basierend auf dem Auswertungsergebnis kann die Auswerteeinheit dann ähnlich wie die Auswerteeinheit 117 der Sensoreinrichtung 107 Steuerbefehle generieren. Diesbezüglich wird auf die obigen Ausführungen verwiesen.

Fig. 5 ist ein Diagramm, das einen Anregungsimpuls 134 zeigt, der von der Anregungseinheit 132 in Richtung des Untergrunds 113 ausgesendet wird. Ferner ist in das Diagramm eine Abklingkurve 138 eingezeichnet, die aufgrund der Anregung durch den Anregungsimpuls 134 erzeugt und von der Empfangseinheit 140 empfangen wird.

Die Auswerteeinheiten 117 und 142 können ferner derart beschaffen sein, dass sie basierend auf den Signalausgängen der Empfangseinheiten 116 und 140 einen virtuellen Plan des Untergrunds 113 erstellen. Ein solcher Plan kann u.a. dazu verwendet werden, festzustellen, wo sich ein Rasen in einem schlechten Zustand befindet. Entsprechend können Gegenmaßnahmen getroffen werden, wie beispielsweise ein Wässern oder Düngen des Rasens. Auch können anhand eines solchen Plans die Perioden ermittelt werden, in denen ein Rasen geschnitten, gewässert oder gedüngt werden sollte.

Zudem kann die Vorrichtung 100 eine nicht näher dargestellte Anzeigeeinrichtung in Form eines Displays oder dergleichen aufweisen, die derart beschaffen ist, dass sie dem Bediener der Vorrichtung 100 ein Auswerteergebnis der Auswerteeinheit anzeigt. Dieser kann dann ggf. unmittelbar Maßnahmen in Abhängigkeit von dem Auswerteergebnis einleiten.

Es sollte klar sein, dass die zuvor beschriebenen Ausführungsformen der erfindungsgemäßen Vorrichtung zur Landschaftspflege nur als Beispiel dienen und in keinerlei Hinsicht einschränkend sind. Vielmehr sind Modifikationen und Änderungen möglich, ohne den Schutzbereich der vorliegenden Erfindung zu verlassen, der durch die beiliegenden Ansprüche definiert ist. Beispielsweise können Einzelmerkmale der Ausführungsformen in anderer Art und Weise kombiniert werden, als es zuvor beschrieben wurde. Ferner muss es sich bei der Vorrichtung zur Landschaftspflege weder um einen Rasenmäher noch um eine autonome Vorrichtung handeln.

**Patentansprüche**

1. Vorrichtung (100) zur Landschaflspflege, insbesondere Rasenmäher, umfassend zumindest eine Sensoreinrichtung (107; 130), wobei die zumindest eine Sensoreinrichtung (107; 130) derart beschaffen ist, dass sie verschiedene Beschaffenheiten eines Untergrunds (113) unterhalb und/oder in der Umgebung der Vorrichtung (100) erfassen und zuordnen kann, indem sie den normalisierten differenzierten Vegetationsindex NDVI ermittelt, **dadurch gekennzeichnet, dass** die Sensoreinrichtung (107) anhand des NDVI auch Objekte erfassen kann, die ein lindernis für die Vorrichtung (100) darstellen.

2. Vorrichtung (100) nach Anspruch 1, **dadurch gekennzeichnet, dass** die Sensoreinrichtung (107) derart beschaffen ist, dass sie verschiedene Beschaffenheiten des Untergrunds (113) anhand des Reflexionsgrads einer von der Sensoreinrichtung (107) ausgesendeten und am Untergrund (113) reflektierten Strahlung erfassen und zuordnen kann.

3. Vorrichtung (100) nach einem der vorhergehenden Ansprüche, **dadurch gekennzeichnet, dass** beim Erfassen von Hindernissen durch die Sensoreinrichtung (107) eine Ausrwerteeinheit (117) Steuersignale zum Ansteuern einer Antriebseinheit generiert, um dem entsprechenden Hindernis auszuweichen.

4. Vorrichtung (100) nach einem der vorhergehenden Ansprüche, **dadurch gekennzeichnet, dass** die Sensoreinrichtung (107) wenigstens eine Lichtquelle (108; 109), die derart beschaffen ist, dass sie Licht im sichtbaren Spektralbereich und Licht im Infrarotbereich aussenden kann, und zumindest eine Empfangseinheit (116) zum Empfangen des reflektierten Lichtes aufweist.

5. Vorrichtung (100) nach einem der vorhergehenden Ansprüche, **dadurch gekennzeichnet, dass** die Sensoreinrichtung (107) wenigstens zwei Lichtquellen (108, 109), die derart beschaffen sind, dass die eine Lichtquelle (103) Licht im sichtbaren Spektralbereich und die andere Lichtquelle (109) Licht im Infrarotbereich aussendet, und zumindest eine Empfangseinheit (116) zum Empfangen des reflektierten Lichtes aufweist.

6. Vorrichtung (100) nach Anspruch 1, **dadurch gekennzeichnet, dass** die Sensoreinrichtung (130) derart beschaffen ist, dass sie verschiedene Beschaffenheiten des Untergrunds (113) anhand einer Fluoreszenzspektroskopie erfassen und zuordnen kann.

7. Vorrichtung (100) nach Anspruch 6, **dadurch gekennzeichnet, dass** die Sensoreinrichtung (130) zumindest eine Anregungseinheit (132) und zumindest eine Empfangseinheit (140) aufweist.

8. Vorrichtung (100) nach einem der vorhergehenden Ansprüche, **dadurch gekennzeichnet, dass** die Sensoreinrichtung (107; 130) zumindest eine Auswerteeinheit (117; 142) aufweist, die derart beschaffen ist, dass sie Signalausgänge der Empfangseinheit (116; 140), welche die Beschaffenheit des Untergrunds (113) repräsentieren, auswertet und/oder weiterverarbeitet.

9. Vorrichtung (100) nach Anspruch 8, **dadurch gekennzeichnet, dass** die Auswerteeinheit (117; 142) derart beschaffen ist, dass sie basierend auf den Signalausgängen der Empfangseinheit (116; 140) einen virtuellen Plan des Untergrunds (113) erstellt.

10. Vorrichtung (100) nach einem der Ansprüche 8 oder 9, **dadurch gekennzeichnet, dass** diese eine Anzeigeeinrichtung ausweist, die derart beschaffen ist, dass sie dem Bediener ein Auswerteergebnis der Auswerteeinheit (117; 142) anzeigt.

11. Vorrichtung (100) nach einem der Ansprüche 8 bis 10, **dadurch gekennzeichnet, dass** die Auswerteeinrichtung derart beschaffen ist, dass sie basierend auf den Signalausgängen der Sensoreinrichtung Steuerbefehle für weitere Komponenten der Vorrichtung generiert.

12. Vorrichtung nach einem der vorhergehenden Ansprüche, **dadurch gekennzeichnet, dass** die Vorrichtung ein Rasenmäher ist.

13. Vorrichtung (100) nach Anspruch 12, **dadurch gekennzeichnet, dass** die Vorrichtung ein autonomer Rasenmäher ist.

14. Vorrichtung (100) nach Anspruch 12 oder 13, **dadurch gekennzeichnet, dass** Steuersignale generiert werden, die andere Komponenten des Rasenmähers ansteuern.

15. Vorrichtung (100) nach Anspruch 14, **dadurch gekennzeichnet, dass** der Motor für das Schneidblatt des Rasenmähers ausgeschaltet wird, wenn die Sensoreinrichtung (107) ein Hindernis detektiert hat, ein Ausweichen jedoch nicht mehr möglich ist

**EP 2 229 045 B1**

**Claims**

1. Device (100) for landscape maintenance, more particularly a lawnmower, comprising at least one sensor apparatus (107; 130), wherein the at least one sensor apparatus (107; 130) is configured such that it is able to detect and assign different conditions of the ground (113) below and/or in the vicinity of the device (100) by establishing the normalized difference vegetation index NDVI, **characterized in that** the sensor apparatus (107) can also use the NDVI to detect objects that constitute an obstacle for the device (100).

2. Device (100) according to Claim 1, **characterized in that** the sensor apparatus (107.) is configured such that it is able to detect and assign different conditions of the ground (113) using the degree of reflection of radiation emitted by the sensor apparatus (107) and reflected from the ground (113).

3. Device (100) according to one of the preceding claims, **characterized in that**, when obstacles are detected by the sensor apparatus (107), an evaluation unit (117) generates control signals for actuating a drive unit in order to evade the corresponding obstacle.

4. Device (100) according to one of the preceding claims, **characterized in that** the sensor apparatus (107) has at least one light source (108; 109), which is configured such that it is able to emit light in the visible spectral range and light in the infrared range, and at least one reception unit (116) for receiving the reflected light.

5. Device (100) according to one of the preceding claims, **characterized in that** the sensor apparatus (107) has at least two light sources (108, 109), which are configured such that the one light source (108) emits light in the visible spectral range and the other light source (109) emits light in the infrared range, and at least one reception unit (116) for receiving the reflected light.

6. Device (100) according to Claim 1, **characterized in that** the sensor apparatus (130) is configured such that it can detect and assign different conditions of the ground (113) using fluorescence spectroscopy.

7. Device (100) according to Claim 6, **characterized in that** the sensor apparatus (130) has at least one excitation unit (132) and at least one reception unit (140).

8. Device (100) according to one of the preceding claims, **characterized in that** the sensor apparatus (107; 130) has at least one evaluation unit (117; 142), which is configured such that it evaluates and/or processes signal outputs from the reception unit (116; 140), which represent the condition of the ground (113).

9. Device (100) according to Claim 8, **characterized in that** the evaluation unit (117; 142) is configured such that it generates a virtual map of the ground (113) on the basis of the signal outputs from the reception unit (116; 140).

10. Device (100) according to one of Claims 8 or 9, **characterized in that** said device has a display apparatus, which is configured such that it shows the operator an evaluation result from the evaluation unit (117; 142).

11. Device (100) according to one of Claims 8 to 10, **characterized in that** the evaluation apparatus is configured such that it generates control commands for further components of the device on the basis of the signal outputs of the sensor apparatus.

12. Device according to one of the preceding claims, **characterized in that** the device is a lawnmower.

13. Device (100) according to Claim 12, **characterized in that** the device is an autonomous lawnmower.

14. Device (100) according to Claim 12 or 13, **characterized in that** control signals are generated that actuate other components of the lawnmower.

15. Device (100) according to Claim 14, **characterized in that** the motor for the cutting blade of the lawnmower is turned off if the sensor apparatus (107) has detected an obstacle but evasion is no longer possible.

**Revendications**

1. Dispositif (100) pour l'entretien des espaces verts, notamment tondeuse, comprenant au moins un dispositif de détection (107 ; 130), l'au moins un dispositif de détection (107 ; 130) étant conçu de telle sorte qu'il peut détecter et classer différentes propriétés d'un sous-sol (113) situé en dessous et/ou dans les environs du dispositif (100), en ce qu'il calcule l'indice de végétation NDVI normalisé différencié, **caractérisé en ce que** le dispositif de détection (107) peut également détecter des objets pouvant représenter un obstacle pour le dispositif (100) à l'aide de l'indice NDVI.

2. Dispositif (100) selon la revendication 1, **caractérisé en ce que** le dispositif de détection (107) est conçu de telle sorte qu'il peut détecter et classer différentes propriétés du sous-sol (113) à l'aide du degré de réflexion d'un rayonnement émis par le dispositif de détection (107) et réfléchi par le sous-sol (113).

3. Dispositif (100) selon l'une quelconque des revendications précédentes, **caractérisé en ce que** lors de la détection d'obstacles par le dispositif de détection (107), une unité d'analyse (117) génère des signaux de commande pour exciter une unité d'entraînement en entrée, pour éviter l'obstacle correspondant.

4. Dispositif (100) selon l'une quelconque des revendications précédentes, **caractérisé en ce que** le dispositif de détection (107) comporte au moins une source lumineuse (108 ; 109) conçue de telle sorte qu'elle peut émettre de la lumière dans la zone visible du spectre et de la lumière dans la zone infrarouge et présente au moins une unité de réception (116) pour recevoir la lumière réfléchie.

5. Dispositif (100) selon l'une quelconque des revendications précédentes, **caractérisé en ce que** le dispositif de détection (107) comporte au moins deux sources lumineuses (108, 109) conçues de telle sorte que la source lumineuse (108) émet de la lumière dans la zone visible du spectre et que l'autre source lumineuse (109) émet de la lumière dans la zone infrarouge et comporte au moins une unité de réception (116) pour recevoir la lumière réfléchie.

6. Dispositif (100) selon la revendication 1, **caractérisé en ce que** le dispositif de détection (130) est conçu de telle sorte qu'il peut détecter et classer différentes propriétés du sous-sol (113) à l'aide d'une spectroscopie par fluorescence.

7. Dispositif (100) selon la revendication 6, **caractérisé en ce que** le dispositif de détection (130) comporte au moins une unité d'excitation (132) et au moins une unité de réception (140).

8. Dispositif (100) selon l'une quelconque des revendications précédentes, **caractérisé en ce que** le dispositif de détection (107 ; 130) comporte au moins une unité d'analyse (117 ; 142) conçue de telle sorte qu'elle analyse et/ou retraite les sorties de signaux de l'unité de réception (116 ; 140) représentant la propriété du sous-sol (113).

9. Dispositif (100) selon la revendication 8, **caractérisé en ce que** l'unité d'analyse (117 ; 142) est conçue de telle sorte qu'elle met en place, sur la base des sorties de signaux de l'unité de réception (116 ; 140), un plan virtuel du sous-sol (113).

10. Dispositif (100) selon l'une quelconque des revendications 8 ou 9, **caractérisé en ce qu'**il comporte un dispositif d'affichage conçu de telle sorte qu'il affiche à l'utilisateur un résultat d'analyse de l'unité d'analyse (117 ; 142).

11. Dispositif (100) selon l'une quelconque des revendications 8 à 10, **caractérisé en ce que** le dispositif d'analyse est conçu de telle sorte qu'il émet des ordres de commande pour les autres composants du dispositif sur la base des sorties de signaux du dispositif de détection.

12. Dispositif selon l'une quelconque des revendications précédentes, **caractérisé en ce que** le dispositif est une tondeuse.

13. Dispositif (100) selon la revendication 12, **caractérisé en ce que** le dispositif est une tondeuse autonome.

14. Dispositif (100) selon la revendication 12 ou 13, **caractérisé en ce que** des signaux de commande excitant les autres composants de la tondeuse sont émis.

**15.** Dispositif (100) selon la revendication 14, **caractérisé en ce que** le moteur de la lame de coupe de la tondeuse est déconnecté lorsque le dispositif de détection (107) a détecté un obstacle ne pouvant pas être évité.

**Fig. 1**

EP 2 229 045 B1

100

102

106

107

112

104

104

**Fig. 2a**

116

117 118 116a 116b 108 107 109

115 110

114 111

113

**Fig. 2b**

120    124

126

100

**Fig. 3a**

122

[NDVI]

1

0

-1

$t_0$    $t_1$    $t_2$    t [s]

**Fig. 3b**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030019152 A
- DE 10152726 A1
- DE 10302908 A1